# EUROPEAN PATENT SPECIFICATION

(11) **EP 3 684 871 B1**
(45) Date of publication and mention of the grant of the patent: **09.08.2023**
(21) Application number: 18858518.6
(22) Date of filing: 19.09.2018
(51) Int. Cl.: C09D 167/00, C09D 133/04, C08G 63/181, C08G 63/553, C09D 175/06

(54) **COATING COMPOSITIONS INCLUDING A FURAN-CONTAINING POLYESTER, ARTICLES, AND METHODS OF COATING**
BESCHICHTUNGSZUSAMMENSETZUNGEN MIT EINEM FURANHALTIGEN POLYESTER, GEGENSTÄNDE UND BESCHICHTUNGSVERFAHREN
COMPOSITIONS DE REVÊTEMENT COMPRENANT UN POLYESTER CONTENANT UN FURANE, ARTICLES ET PROCÉDÉS D'APPLICATION DE REVÊTEMENT

(30) Priority: 19.09.2017 US 201762560425 P
(43) Date of publication of application: 29.07.2020
(73) Proprietor: Swimc LLC, Cleveland, OH 44115 (US)
(72) Inventor: ANDRIOT, Matthieu, 01340 Attignat (FR); KROICHVILI, Frederic, 71700 Tournus (FR); PROUVOST, Benoit, 44000 Nantes (FR)
(74) Representative: Novagraaf Group
(86) International application number: PCT/US2018/051726
(87) International publication number: WO 2019/060403

(56) References cited:
- WO-A1-2010/062928
- WO-A1-2010/118349
- US-A1- 2008 081 883
- US-A1- 2012 125 799
- US-A1- 2013 171 397
- US-A1- 2017 051 177

## Description

The present invention provides a food or beverage container coating composition comprising a furan-containing polyester; a method of coating a food or beverage container, the method using such a coating composition; and a food or beverage container comprising a metal substrate having a surface at least partially coated with a coating comprising a furan-containing polyester.

### BACKGROUND

Various coatings have been used as interior protective container coatings, including, for example, aromatic polyesters (based on terephthalic acid). In general, it is difficult to take such polymers, which have utility in solvent-based coating compositions, and successfully disperse them into an aqueous medium to produce a water-based coating composition that exhibits suitable coating properties when cured. This is especially true in the area of packaging coatings (e.g., food or beverage container coatings), where coating compositions must exhibit a stringent balance of difficult to achieve coating properties. To address this shortcoming, the packaging coatings industry has sought alternative coatings.

Also, polymers based on bio-derived compounds are receiving significant attention in an effort to move away from petroleum-derived compounds such as terephthalic acid (TPA). TPA is used primarily to produce polyethylene terephthalate) (PET) for plastic bottles, fibers, films, etc. One such approach is to produce TPA from non-petroleum, bio-based, renewable resources (materials that are produced via a natural process at a rate comparable to their rate of consumption, e.g., within a 100-year time frame, and can be replenished naturally or via agricultural techniques), such as sugar cane, sugar beets, corn, potatoes, citrus fruit, woody plants, lignocellulose, carbohydrate, hemicellulose, cellulosic waste, animals, fish, bacteria, fungi, and forestry products.

The balance of coating performance attributes required for a coating composition to be suitable for use as a food or beverage container coating are particularly stringent and are unique from other coating end uses. As such, coatings designed for other end uses are not typically suitable for use as food or beverage container coatings.

For example, coatings for use on food or beverage containers should avoid unsuitably altering the taste of the packaged food or beverage products, and should also avoid flaking or chipping into the packaged products. The coatings should also resist chemically aggressive food or beverage products (which can have a complex chemical profile, including salts, acids, sugars, fats, etc.) for extended periods of time (e.g., years). Food or beverage container coatings should also have good adhesion to the underlying substrate and remain sufficiently flexible after curing. This is because subsequent fabrication and denting during transportation, storage, or use (e.g., by dropping) may cause the metal substrate to deform, which will cause the coating to flex. A brittle coating will crack during flexure, exposing the container metal to the packaged products, which can sometimes cause a leak in the container. Even a low probability of coating failure may cause a significant number of containers to leak, given the high number of food and beverage containers produced.

Various coatings have been used as protective food or beverage container coatings, including epoxy coatings and polyvinyl-chloride-based coatings. Each of these coating types, however, has potential shortcomings. For example, the recycling of materials containing polyvinyl chloride or related halide-containing vinyl polymers can be problematic. There is also a desire by some to reduce or eliminate certain epoxy compounds (e.g., bisphenol A) commonly used to formulate food-contact epoxy coatings. Although a number of replacement coating compositions made without such materials have been proposed, some replacement compositions have exhibited insufficient coating properties such as insufficient corrosion resistance on metal substrates, insufficient flexibility, or insufficient toughness. US 2012/125799 A1 relates to coating compositions on a packaging article suitable for food contact that exhibit good corrosion resistance and good flexibility. Claim 18 discloses a coating composition, comprising: a polymer having: a polyester backbone, and at least one pendant deblockable isocyanate group attached to the backbone; a phenolic crosslinker; and a liquid carrier. According to paragraph [0071], the polyester may be unsaturated and can have furan groups in its structure.

To address the aforementioned shortcomings, the packaging coatings industry has sought coatings based on alternative binder systems such as polyester resin systems, for example. It has been problematic, however, to formulate polyester-based coatings that exhibit the required balance of coating characteristics (e.g., flexibility, adhesion, corrosion resistance, stability, resistance to crazing, etc.). For example, there has typically been a tradeoff between corrosion resistance and fabrication properties for such coatings. Polyester-based coatings suitable for food-contact that have exhibited both good fabrication properties and an absence of crazing have tended to be too soft and exhibit unsuitable corrosion resistance. Conversely, polyester-based coatings suitable for food contact that have exhibited good corrosion resistance have typically exhibited poor flexibility and unsuitable crazing when fabricated.

Accordingly, it will be appreciated that what is needed in the art are improved coating compositions that exhibit the stringent balance of coating properties to permit the use of such coating compositions on food or beverage containers.

### SUMMARY OF THE DISCLOSURE

The present disclosure provides food or beverage container coating compositions, articles having a coating formed from such compositions, and methods of coating. Herein, a food or beverage "container" is used to encompass containers such as pails or drums in addition to conventional cans.

The present invention provides, a food or beverage container coating composition that includes a furan-containing polyester and a liquid carrier (e.g., water and/or an organic solvent), as defined in the claims. Furthermore, the present invention provides a food or beverage container that includes a metal substrate having a surface (e.g., an inside or interior surface, an exterior surface, or both) at least partially coated with a coating including a furan-containing polyester, as defined in the claims.

Moreover, the present invention provides a method that includes: providing an inventive coating composition ; applying the coating composition to at least a portion of a metal substrate prior to or after forming the metal substrate into a food or beverage container or portion thereof; and thermally curing the coating composition, as defined in the claims.

The terms "polymer" and "polymeric material" include, but are not limited to, organic homopolymers, copolymers, such as for example, block, graft, random and alternating copolymers, terpolymers, etc., and blends and modifications thereof. Furthermore, unless otherwise specifically limited, the term "polymer" shall include all possible geometrical configurations of the material. These configurations include, but are not limited to, isotactic, syndiotactic, and atactic symmetries.

Herein, the term "comprises" and variations thereof do not have a limiting meaning where these terms appear in the description and claims. Such terms will be understood to imply the inclusion of a stated step or element or group of steps or elements but not the exclusion of any other step or element or group of steps or elements. By "consisting of" is meant including, and limited to, whatever follows the phrase "consisting of." Thus, the phrase "consisting of" indicates that the listed elements are required or mandatory, and that no other elements may be present. By "consisting essentially of" is meant including any elements listed after the phrase, and limited to other elements that do not interfere with or contribute to the activity or action specified in the disclosure for the listed elements. Thus, the phrase "consisting essentially of" indicates that the listed elements are required or mandatory, but that other elements are optional and may or may not be present depending upon whether or not they materially affect the activity or action of the listed elements. Any of the elements or combinations of elements that are recited in this specification in open-ended language (e.g., comprise and derivatives thereof), are considered to additionally be recited in closed-ended language (e.g., consist and derivatives thereof) and in partially closed-ended language (e.g., consist essentially, and derivatives thereof).

The words "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other claims are not useful, and is not intended to exclude other embodiments from the scope of the disclosure.

In this application, terms such as "a," "an," and "the" are not intended to refer to only a singular entity, but include the general class of which a specific example may be used for illustration. The terms "a," "an," and "the" are used interchangeably with the term "at least one." The phrases "at least one of" and "comprises at least one of" followed by a list refers to any one of the items in the list and any combination of two or more items in the list.

As used herein, the term "or" is generally employed in its usual sense including "and/or" unless the content clearly dictates otherwise.

The term "and/or" means one or all of the listed elements or a combination of any two or more of the listed elements.

Also herein, all numbers are assumed to be modified by the term "about" and in certain embodiments, preferably, by the term "exactly." As used herein in connection with a measured quantity, the term "about" refers to that variation in the measured quantity as would be expected by the skilled artisan making the measurement and exercising a level of care commensurate with the objective of the measurement and the precision of the measuring equipment used. Herein, "up to" a number (e.g., up to 50) includes the number (e.g., 50).

Also herein, the recitations of numerical ranges by endpoints include all numbers subsumed within that range as well as the endpoints (e.g., 1 to 5 includes 1, 1.5, 2, 2.75, 3, 3.80, 4, 5, etc.).

As used herein, the term "room temperature" refers to a temperature of 20°C to 25°C.

The term "in the range" or "within a range" (and similar statements) includes the endpoints of the stated range.

Reference throughout this specification to "one embodiment," "an embodiment," "certain embodiments," or "some embodiments," etc., means that a particular feature, configuration, composition, or characteristic described in connection with the embodiment is included in at least one embodiment of the disclosure. Thus, the appearances of such phrases in various places throughout this specification are not necessarily referring to the same embodiment of the disclosure. Furthermore, the particular features, configurations, compositions, or characteristics may be combined in any suitable manner in one or more embodiments.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples may be used in various combinations. In each instance, the recited list serves only as a representative group and should not be interpreted as an exclusive list. Thus, the scope of the present disclosure should not be limited to the specific illustrative structures described herein, but rather extends at least to the structures described by the language of the claims, and the equivalents of those structures. Any of the elements that are positively recited in this specification as alternatives may be explicitly included in the claims or excluded from the claims, in any combination as desired. Although various theories and possible mechanisms may have been discussed herein, in no event should such discussions serve to limit the claimable subject matter.

### DETAILED DESCRIPTION OF ILLUSTRATIVE EMBODIMENTS

The present invention provides a food or beverage container coating composition that includes a furan-containing polyester and a liquid carrier (e.g., water and/or an organic solvent), and a food or beverage container that includes a metal substrate having an inside surface, an exterior surface, or both, at least partially coated with a coating including a furan-containing polyester, as defined in the claims, respectively.

A polyester is a polymer that contains ester functional groups in its main chain, and is derived from ingredients including a combination of a diacid or diester, and a diol. Linear polyesters typically are prepared from one or more dicarboxylic acids and one or more diols via direct esterification, by reacting together one or more dimethyl esters and one or more diols via transesterification, or by carrying out both direct esterification and transesterification in a multistep process. Herein, a polyester includes modifications thereof, such as copolyesters, grafted polyesters, water-dispersible polyesters, etc. A copolyester may result from the introduction of other diacids and/or diols. Thus, a copolyester is a polyester formed from two or more different diacids and/or two or more different diols. A water-dispersible polyester may include an acrylated polyester, formed for example, as a result of grafting acid-functional acrylic groups to a polyester to render the polyester water-dispersible. The grafting can occur via a variety of means (e.g., reacting complimentary end-groups, polymerizing acrylic monomers onto unsaturation in the polyester, hydrogen abstraction, etc.). Water-dispersible polyesters that can be modified with furan-containing groups as described herein are disclosed in U.S. Patent Application Serial No. 62/436,112, filed on December 19, 2016, entitled, "Aqueous Polyester Dispersions, Articles Having a Coating Formed from Such Aqueous Dispersions, and Methods of Coating," which has published as WO 2018/118802.

Herein, furan-containing polyesters include furan groups in the backbone between ester linkages. A furan-containing polyester typically includes one or more structural units derived from 2,5-furandicarboxylic acid, for example.

The furan groups are heterocyclic organic groups consisting of a five-membered aromatic ring with four carbon atoms and one oxygen. They may be present, for example, between ester linkages as individual furan rings or as two furan ring-containing segments (i.e., bis-furan), as described in U.S. Pat. No. 9,527,952 (Sucheck et al.).

### Furan-Containing Polyesters

Polyesters containing furan groups are typically bio-based, generally considered biodegradable, and can be either thermoset or thermoplastic. Typically, thermoplastic furan-containing polyesters are used in making molded products, fibers, films, mono- and multi-layer containers, and the like. Examples of such polyesters, e.g., 2,5-furandicarboxylate polyesters, are described in U.S. Pat. Pub. No. 2016/0376400 (Moffitt et al.) and International Pub. Nos. WO 2016/130748 (Coca-Cola Company) and WO 2014/100254 (Dow Global Technologies). While some of these may be suitable for use in container coating compositions of the present disclosure, preferably, the furan-containing polyesters are thermoset (i.e., a polymer which becomes irreversibly hardened upon being cured).

Furfural, which is an aldehyde of furan (furan-2-carbaldehyde), is a bio-based starting compound that can be used to make polymers such as polyesters. It can be produced from a variety of renewable, non-food resources, including corn cobs, corn husks, oat hulls, sugarcane bagasse, wheat bran, and sawdust. Furfural can be converted to many furan-based monomers, which have been used to make polymers, for use in bottles, films, fibers, and the like, but never in the area of packaging coatings (e.g., food or beverage container coatings), where coating compositions must exhibit a stringent balance of difficult to achieve coating properties.

Typically, polyesters such as PET (polyethylene terephthalate) are condensation polymers made from one or more diols (e.g., ethylene glycol) and terephthalic acid (HOC(O)-C₆H₄-C(O)OH; TPA). Furan-containing polyesters useful in container coating compositions of the present disclosure include less than 10 wt-%, less than 5 wt-%, less than 4 wt-%, less than 3 wt-%, less than 2 wt-%, less than 1 wt-%, less than 0.5 wt-%, or less than 0.1 wt-%, TPA in the polyester. These weight percentages correspond to the total weight of TPA monomers used to form the polyester relative to the total weight of the reactants used to form the polyester. Preferably, there is no TPA in the polyester used in the coating compositions of the present disclosure.

A variety of furan-based compounds having reactive functional groups capable of participating in ester-forming reactions (e.g., hydroxyl groups, carboxylic groups, etc.) can be used to make furan-containing polyesters. Suitable reaction schemes may include, for example, direct esterification reactions or transesterification reactions. For example, 2,5-furandicarboxylic acid and the di(C1-C5)alkyl esters of 2,5-furandicarboxylic acid, which may be symmetric or asymmetric esters (e.g., dimethyl ester of 2,5-furandicarboxylic acid), are known to react with diols to form polyesters. Other furan-based compounds that can be used to make polyesters of the present disclosure include 2,5-bis(hydroxymethyl)furan, 3,4-bis(hydroxymethyl)furan, diglycidyl ether of 2,5-furan dimethanol (or other furan-containing diepoxides), and diols obtained by acetylation of hydroxymethyl furfural (HMF) with a polyol of functionality higher or equal to 3 (e.g., HMF + trimethylol propane).

The use of bis-furan-based compounds as monomeric units for the creation of polyesters is also known. Bis-furan-based polyesters can be synthesized by reacting: (1) a bis-furan diacid halide with an aliphatic or aromatic diol; (2) a bis-furan diester with a glycol; (3) a bis-furan diol with a diacid via an alcohol esterification process; or (4) two moles of HMF via the etherification of the methylol groups or crotonization with a carbonyl compound in order to obtain a bis-furan diol or the corresponding diacid or diglycidyl ether. The synthesis of bis-furan-based polyesters, for example, are described in U.S. Pat. No. 9,527,952 (Sucheck et al.).

The furan-containing polyesters can be prepared using direct esterification. For example, at least one polyfunctional alcohol ("polyol") and at least one furan-containing dicarboxylic acid can undergo direct esterification. In some embodiments, a transesterification polymerization may be used. For example, a reaction between a furan dicarboxylic acid diester and a diol in the presence of a catalyst can form a polyester with furan-containing groups.

Examples of suitable polyols for use with furan-containing compounds (e.g., a furandicarboxylic acid) to make furan-containing polyesters include diols, polyols having three or more hydroxyl groups (e.g., triols, tetraols, etc.), and combinations thereof. Suitable polyols may include, for example, ethylene glycol, propylene glycol, 1,3-propanediol, 2-methyl-1,3-propanediol, glycerol, diethylene glycol, dipropylene glycol, triethylene glycol, trimethylolpropane, trimethylolethane, tripropylene glycol, neopentyl glycol, pentaerythritol, 1,4-butanediol, 1,6-hexanediol, hexylene glycol, cyclohexanedimethanol, tricyclodecane dimethanol, a polyethylene or polypropylene glycol, isopropylidene bis(p-phenylene-oxypropanol-2), 2,2,4,4-tetramethyl-1,3-cyclobutanediol, and mixtures thereof. If desired, adducts of polyol compounds (e.g., triols, tetraols, etc.) and monofunctional compounds may be used. In some embodiments, the polyester is not made using neopentyl glycol.

Polycarboxylic acids that do not include furan groups may also be incorporated into the furan-containing polyesters of the present disclosure for a variety of functions. For example, they may be used to provide flexibility to the polyester and the resultant coating. They may be used to incorporate one or more soft segments to lower overall glass transition (Tg) of the polyester (e.g., as compared to a polyester of a similar molecular weight lacking the one or more soft segments). They may be used to incorporate water-dispersible groups into the polyester (as discussed below). Examples of suitable polycarboxylic acids include dicarboxylic acids, polycarboxylic acids having higher acid functionality (e.g., tricarboxylic acids, tetracarboxylic acids, etc.), anhydrides thereof, precursors or derivatives thereof (e.g., an esterifiable derivative of a polycarboxylic acid, such as a dimethyl ester or anhydride), or mixtures thereof. Suitable polycarboxylic acids may include, for example, maleic acid, fumaric acid, succinic acid, adipic acid, phthalic acid, tetrahydrophthalic acid, methyltetrahydrophthalic acid, hexahydrophthalic acid, methylhexahydrophthalic acid, endomethylenetetrahydrophthalic acid, azelaic acid, sebacic acid, isophthalic acid, trimellitic acid, naphthalene dicarboxylic acid, cyclohexane dicarboxylic acid, glutaric acid, dimer fatty acids (e.g., Radiacid 960 dimer fatty acid), nadic acid, anhydrides or derivatives thereof, and mixtures thereof. If desired, adducts of polyacid compounds (e.g., triacids, tetraacids, etc.) and monofunctional compounds may be used. It should be understood that in synthesizing the polyester, the specified acids may be in the form of anhydrides, esters (e.g., alkyl ester), or like equivalent form. For sake of brevity, such compounds are referred to herein as "carboxylic acids" or "polycarboxylic acids."

It is contemplated that, in certain embodiments, the furan-containing polyester may include some long-chain hydrocarbons having 12 or less carbon atoms such as, for example, sebacic acid. In some embodiments, however, the furan-containing polyester is free or appreciably free of fatty acids (e.g., long-chain or very long-chain fatty acids), oils, and/or other long-chain hydrocarbons. It is believed that the use of unsuitable amounts of such materials may impart undesirable off-tastes or odors to packaged food or beverage products that are kept in prolonged contact with the coating compositions of the present disclosure. In certain embodiments, the furan-containing polyester includes no more than 20 percent by weight (wt-%), no more than 15 wt-%, or no more than 5 wt-%, if any, of fatty acids, oils, or other "long-chain" hydrocarbons (e.g., having 8 or more carbon atoms such as ≥C10, ≥C12, ≥C15, ≥C20, ≥C30), based on the total non-volatile weight of the reactants used to make the polyester.

Any suitable reaction process may be used to make the polymers of the present disclosure. Suitable such processes include, for example, processes in which polymerization occurs in the presence of a solvent such as reflux polymerization processes as well as processes in which polymerization occurs in the absence of added solvent such as melt-blend polymerization processes.

In the present invention, the furan-containing polyester includes at least 5 wt-%, at least 10 wt-%, at least 15 wt-%, or at least 20 wt-%, furan groups in the backbone of the polyester. Furthermore, the furan-containing polyester includes up to 40 wt-%, up to 35 wt-%, up to 30 wt-%, or up to 25 wt-%, furan groups in the backbone of the polyester. These weight percentages correspond to the total weight of furan-containing monomers used to form the polyester relative to the total weight of the reactants used to form the polyester.

The furan-containing polyester may be of any suitable molecular weight. In preferred embodiments, the water-dispersible polyester polymer has a number average molecular weight (Mn) of at least 1,000 Daltons (Da). While the upper molecular weight range is not restricted, the polyester will typically have a Mn of less than 50,000 Da. The molecular weight may vary depending on a variety of factors, including, for example, the desired coating end use, cost, and the manufacturing method employed to synthesize the polymer. In certain embodiments, a furan-containing polyester has a number average molecular weight of at least 1,000 Daltons (Da), at least 2,000 Da, or at least 3,000 Da. In certain embodiments, a furan-containing polyester has a number average molecular weight of up to 20,000 Da or up to15,000 Da, and particularly for water-based systems, up to 10,000 Da, or particularly for solvent-based systems, up to 7,000 Da. The number-average molecular weight can be determined by a number of methods, such as, for example, gel permeation chromatography (GPC) and a polystyrene standard being used for calibration.

The furan-containing polyester has a suitable glass transition temperature ("Tg").

The furan-containing polyester has a Tg of at least 0°C, at least 10°C, or at least 25°C. Although the maximum Tg is not particularly restricted, the Tg is less than 150°C, less than 100°C, or less than 50°C. The DSC test method in the Examples Section is a useful test for determining the Tg.

In certain embodiments, a furan-containing polyester has an acid number of at least 1 milligram (mg) KOH per gram dry resin. When acid or anhydride groups are used to impart water-dispersibility to the polyester, as described in more detail below, the acid- or anhydride-functional polymer preferably has an acid number of at least 5, at least 10, at least 15, at least 20, at least 25, or at least 30, mg KOH per gram dry resin. The acid- or anhydride-functional polyester polymer preferably has an acid number of up to 400, up to 300, up to 200, or up to 100, mg KOH per gram dry resin. The acid number may be determined as described in the Examples Section.

In certain embodiments, a furan-containing polyester has a hydroxyl number of at least 5, at least 10, at least 15, or at least 20, mg KOH per gram dry resin. In certain embodiments, a furan-containing polyester has a hydroxyl number of up to 100, up to 50, or up to 25, mg KOH per gram dry resin. Methods for determining hydroxyl numbers are well known in the art. See, for example, ASTM D1957-86 (Reapproved 2001) entitled "Standard Test Method for Hydroxyl Value of Fatty Oils and Acids" and available from the American Society for Testing and Materials International of West Conshohocken, PA.

Polyesters of the present disclosure are typically amorphous, although a limited amount of crystallinity may be tolerated. If the polymer is highly crystalline in the solid state it becomes hazy (or white), it is more difficult to dissolve, and only solvents that create a stronger interaction with the polymer molecules than exists between the polymer molecules are suitable. Very often a solution of a highly crystalline polymer becomes hazy during storage, and crystals can appear in the solution. Such polymers are not useable in the coatings industry due to, for example, appearance and mechanical performance problems.

Crystallinity may be controlled by reducing the symmetry of the monomers used to make the polyesters. Typically, this can be done by controlling the starting monomers on the polyol side of the reaction. Using sterically hindered polyols, for example, is a good way to reduce the symmetry of the starting monomers, and hence, the crystallinity of the resultant polyester. Examples of hindered polyols include neopentylglycol, butyl ethyl propane diol, and tricyclodecane dimethanol. Crystallinity can be observed and quantified by X-Ray analysis; however, if crystallinity is too low, it is undetectable by X-Ray analysis.

If a polymer is low in crystallinity, a solution in a weak solvent can become hazy during storage and the cured film can have aging problems. Although the mechanical properties are good if stamping (as in a can manufacturing process) takes place immediately after coating, they can become poor after aging several days, even at room temperature. To decrease this trend, a dissymmetry is introduced in the polymer backbone using small amounts of branched starting monomers (e.g., hindered polyols or polyacids).

### Water-Dispersing Techniques

In certain embodiments, it may be desirable to make the furan-containing polyesters water-dispersible. This can be done by a number of known techniques.

For example, a water-dispersible polyester may include one or more water-dispersing groups, at least one of which has been incorporated into the polymer using the functionalization method disclosed in U.S. Pat. No. 9,650,176 (Cavallin et al.). In this method, an unsaturated compound including a salt or salt-forming group is grafted unto unsaturated groups within the polymer. A preferred compound for achieving this is sorbic acid or anhydride (e.g., grafted onto an unsaturation site provided by maleic anhydride).

Examples of suitable unsaturated compounds having salt or salt-forming groups include sorbic acid (also referred to as 2,4-hexadienoic acid), 2,4-pentadienoic acid, furoic acid, 1-amino-1,3-butadiene, vinyl acetic acid, neutralized variants thereof, and combinations thereof. Sorbic acid is a preferred unsaturated compound for use in forming the water-dispersible polymer. Anyhydrides and dianhydrides can also be used to provide acid groups. These types of compounds are preferred for the method disclosed in U.S. Pat. No. 9,650,176 (Cavallin et al.).

Water-dispersible polyesters can be modified with furan-containing groups according to the method disclosed in U.S. Patent Application Serial No. 62/436,112, filed on December 19, 2016, entitled, "Aqueous Polyester Dispersions, Articles Having a Coating Formed from Such Aqueous Dispersions, and Methods of Coating," which has published as WO 2018/118802.

U.S. Pat. No. 8,349,929 (Kainz et al.) discloses a melt-blend process for dispersing a high molecular weight polyester that is not otherwise water-dispersible into water.

Dispersing approaches are also discussed in U.S. Pat. No. 8,663,765 (Skillman et al.) and U.S. Pub. No. 2005/0196629 (Bariatinksy et al.). In this latter publication, acid-functional acrylic groups are incorporated into polymers such as polyester polymers to render the polymer dispersible in water. The acid-functional acrylic groups are typically incorporated into the polymer via reaction with a carbon-carbon double bond of the polymer via a free-radical polymerization reaction involving initiator. This process prefers difunctionl unsaturated monomers that react into the backbone of a polyester polymer and provide a carbon-carbon double bond onto which acid-functional acrylic groups can be grafted. Maleic anhydride is the most common type of such compounds.

A water-dispersible polyester of the present disclosure can include a wide variety of suitable water-dispersing groups. In certain embodiments, the water-dispersing groups may be in the form of one or more salt groups such as, for example, anionic or cationic salt groups (e.g., neutralized acid or base groups), or a combination thereof.

Examples of suitable salt groups include anionic groups, cationic groups, and combinations thereof. Examples of anionic salt groups include neutralized acid or anhydride groups, sulphate groups (-OSO₃⁻), phosphate groups (-OPO₃⁻), sulfonate groups (-SO₂O⁻), phosphinate groups (-POO⁻), phosphonate groups (-PO₃⁻), and combinations thereof. Examples of suitable cationic salt groups include quaternary ammonium groups, quaternary phosphonium groups, tertiary sulfate groups, and combinations thereof.

Examples of salt groups include neutralized acid (e.g., neutralized carboxylic groups) or anhydride groups and neutralized base groups.

Nonlimiting examples of neutralizing agents for forming anionic salt groups include inorganic and organic bases such as an amines, sodium hydroxide, potassium hydroxide, lithium hydroxide, ammonia, and mixtures thereof. Fugitive bases such as nitrogen-containing bases (e.g., ammonia and amines) are preferred bases.

In certain embodiments, tertiary amines are preferred neutralizing agents. Nonlimiting examples of suitable tertiary amines include trimethyl amine, dimethylethanol amine (also known as dimethylamino ethanol), methyldiethanol amine, triethanol amine, ethyl methyl ethanol amine, dimethyl ethyl amine, dimethyl propyl amine, dimethyl 3-hydroxy-1-propyl amine, dimethylbenzyl amine, dimethyl 2-hydroxy-1-propyl amine, diethyl methyl amine, dimethyl 1-hydroxy-2-propyl amine, triethyl amine, tributyl amine, N-methyl morpholine, and mixtures thereof.

Examples of suitable neutralizing agents for forming cationic salt groups include organic and inorganic acids such as formic acid, acetic acid, hydrochloric acid, sulfuric acid, and combinations thereof.

The incorporation of one or more water-dispersing groups into the polyester may occur, for example, via reaction with an unsaturated compound, at any suitable time during the polymer synthesis.

### Container Coating Compositions

The container coating compositions of the present disclosure include a liquid carrier (e.g., water and/or an organic solvent).

In certain embodiments, the container coating compositions of the present disclosure include water and may further include one or more optional organic solvents. Such compositions are referred to herein as aqueous coating compositions. In some embodiments, the liquid carrier includes at least 20 wt-%, at least 30 wt-%, at least 40 wt-%, at least 50 wt-%, at least 60 wt-%, at least 70 wt-%, or at least 80 wt-%, of water, based on the total weight of the liquid carrier. In some embodiments, the liquid carrier includes 100 wt-% or less, less than 95 wt-%, or less than 90 wt-%, of water, based on the total weight of the liquid carrier. In some embodiments, the liquid carrier is free or substantially free of organic solvent.

In certain embodiments, the container coating compositions of the present disclosure includes one or more organic solvents, and 0 to 2 wt-% water. Such compositions are referred to herein as solvent-based coating compositions.

Whether in the aqueous carrier of an aqueous coating composition or in a solvent-based coating composition, suitable organic solvents include ketones, glycol ethers, esters, alcohols, aromatics, and combinations thereof. Examples of such solvents include cyclohexanone, carbitol, butyl carbitol, butylcellosolve, butanol, methyl isobutyl ketone, methyl isoamyl ketone, methyl amyl ketone, xylene, aromatic 150, aromatic 100, hexylcellosolve, toluene, propylene glycol monomethyl ether acetate, propylene glycol monomethyl ether, dibasic ester, ethyl carbitol, diisobutyl ketone, and mixtures thereof.

In certain preferred embodiments, the coating composition is a liquid (e.g., water-based or solvent-based) coating composition that includes at least a film-forming amount of the polyester of the present disclosure. In some embodiments, the polyester of the present disclosure constitutes a majority (greater than 50 wt-%), or even all (100 wt-%), of the coating composition. In some embodiments, the polyester of the present disclosure is present in the coating composition in an amount of at least 60 wt-%, at least 70 wt-%, at least 80 wt-%, at least 90 wt-%, at least 95 wt-%, at least 98 wt-%, at least 99 wt-%, or even 100 wt-%. These weight percentages are based upon the total weight of the resin solids in the coating composition. While the total amount of solids in the coating composition may vary greatly depending on the particular embodiment, and may be any suitable amount, resin solids will typically constitute at least a majority of the total nonvolatile weight of the coating composition.

The amount of liquid carrier included in a coating composition of the present disclosure is limited only by the desired, or necessary, rheological properties of the composition. Usually, a sufficient amount of carrier is included in the coating composition to provide a composition that can be processed easily and that can be applied to a metal substrate easily and uniformly using a particular application process, and that is sufficiently removed from the coating composition during curing within the desired cure time. In some embodiments, a coating composition typically includes at least 30 wt-% of liquid carrier and more typically at least 40 wt-%, at least 50 wt-% of liquid carrier, at least 60 wt-% of liquid carrier. Alternatively stated, in some embodiments, a coating composition will typically include no more than 50 wt-% of solids, and more typically no more than 40 wt-% of solids. In some embodiments, a coating composition will typically include less than 90 wt-% of liquid carrier, more typically less 80 wt-% of liquid carrier. Alternatively stated, in some embodiments, a coating composition will typically include at least 10 wt-% of solids, more typically at least 20 wt-% of solids. These weight percentages are based upon the total weight of the coating composition.

In certain embodiments, the coating compositions of the present disclosure are storage stable under normal storage conditions (15°C to 30°C) for at least 1 week, at least 1 month, or at least 3 months. In this context, storage stable means that the compositions do not separate into layers or demonstrate significant viscosity variation, there is no crystallization, and/or there is no performance deviation of the resultant cured film.

In certain embodiments, a container coating composition has a viscosity of at least 50 mPa/s (50 centipoise or cps), at least 100 mPa/s, or at least 1,000 mPa/s. In certain embodiments, a container coating composition has a viscosity of up to 50,000 mPa/s, up to 10,000 mPa/s, or up to 5,000 mPa/s. Viscosity of the coating composition can be measured using ASTM D 1200 test procedure at 25°C.

In certain embodiments, a container coating composition further includes a crosslinking resin. For example, any of the well-known hydroxyl/acid-reactive curing (i.e., crosslinking) resins can be used. The choice of particular crosslinker typically depends on the particular product being formulated. Examples of suitable crosslinkers include aminoplasts, phenoplasts, blocked isocyanates, beta-hydroxyalkyl amides, benzoxazines, carbonyl dicaprolactams, oxazolines, and combinations thereof.

Phenoplast resins include the condensation products of aldehydes with phenols. Formaldehyde and acetaldehyde are preferred aldehydes. Various phenols can be employed such as, for example, phenol, cresol, p-phenylphenol, p-tert-butylphenol, p-tert-amylphenol, and cyclopentylphenol, bisphenols, and polyphenols.

Aminoplast resins include, for example, the condensation products of aldehydes such as formaldehyde, acetaldehyde, crotonaldehyde, and benzaldehyde with amino- or amido-group-containing substances such as urea, melamine, and benzoguanamine. Examples of suitable aminoplast resins include benzoguanamine-formaldehyde resins, melamine-formaldehyde resins, esterified melamine-formaldehyde, urea-formaldehyde resins, and combinations thereof.

Condensation products of other amines and amides can also be employed such as, for example, aldehyde condensates of triazines, diazines, triazoles, guanadines, guanamines, and alkyl- and aryl-substituted melamines. Some examples of such compounds are N,N'-dimethyl urea, benzourea, dicyandimide, formaguanamine, acetoguanamine, glycoluril, ammelin 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 3,4,6-tris(ethylamino)-1,3,5-triazine, and the like. While the aldehyde employed is typically formaldehyde, other similar condensation products can be made from other aldehydes, such as acetaldehyde, crotonaldehyde, acrolein, benzaldehyde, furfural, glyoxal and the like, and mixtures thereof.

Examples of suitable isocyanate crosslinkers include blocked or non-blocked aliphatic, cycloaliphatic or aromatic di-, tri-, or poly-valent isocyanates, such as hexamethylene diisocyanate (HMDI), cyclohexyl-1,4-diisocyanate and the like, and mixtures thereof. Examples of generally suitable isocyanates for use in such crosslinkers include isomers of isophorone diisocyanate, dicyclohexylmethane diisocyanate, toluene diisocyanate, diphenylmethane diisocyanate, phenylene diisocyanate, tetramethyl xylene diisocyanate, xylylene diisocyanate, and mixtures thereof.

Other suitable crosslinkers include those described in U.S. Pat. Pub. No. 2016/0297994 (Kuo et al.) such as benzoxazine-based phenolic resins, U.S. Pat. Pub. No. 2016/0115347 (Kuo et al.) such as resole curable phenolic resins based on meta-substituted phenol, U.S. Pat. No. 9,598,602 (Kuo et al.) such as a phenolic resin substituted with at least one methylol group, U.S. Pub. No. 2016/0115345 (Kuo et al.) such as a resole phenolic resin containing the residues of an unsubstituted phenol and/or meta-substituted phenol), and U.S. Pat. Pub. No. 2017/0327272 (Chasser et al.) such as a polycarbodiimide. Other suitable crosslinkers include alkanolamide-type curing agents such as beta-hydroxyalkylamide crosslinkers available under the trade names PRIMID XL-552 and PRIMID QM-1260 from EMS-CHEMIE AG.

The level of crosslinker used will depend, for example, on the type of crosslinker, the time and temperature of the bake, and the molecular weight of the polymer. When used, the crosslinker is typically present in an amount of at least 5 wt-%, or at least 10 wt-%, or at least 15 wt-%. In certain embodiments, a crosslinker is present in an amount of up to 40 wt-%, or up to 30 wt-%, or up to 25 wt-%. These weight percentages are based upon the total weight of the resin solids in the coating composition.

In certain embodiments, the container coating compositions (whether aqueous or solvent-based) may include a catalyst to increase the rate of cure and/or the extent of crosslinking of the polyester and make the overall coating a thermoset coating. Nonlimiting examples of catalysts, include, but are not limited to, strong acids (e.g., dodecylbenzene sulphonic acid (DDBSA, available as CYCAT 600 from Cytec), methane sulfonic acid (MSA), p-toluene sulfonic acid (pTSA), dinonylnaphthalene disulfonic acid (DNNDSA), and triflic acid), quaternary ammonium compounds, phosphorous compounds, tin compounds, titanium compounds, zirconium compounds, zinc compounds, and combinations thereof. Examples include a tetraalkyl ammonium halide, a tetraalkyl or tetraaryl phosphonium iodide or acetate, tin octoate, zinc octoate, triphenylphosphine, and similar catalysts known to persons skilled in the art. If used, a catalyst is preferably present in an amount of at least 0.01 wt-%, and more preferably at least 0.1 wt-%, based on the weight of nonvolatile material in the coating composition. If used, a catalyst is preferably present in an amount of no greater than 3 wt-%, and more preferably no greater than 1 wt-%, based on the weight of nonvolatile material in the coating composition.

The coating composition of the present disclosure may also include other optional ingredients that do not adversely affect the coating composition or a cured coating resulting therefrom. Such optional ingredients are typically included in a coating composition to enhance composition esthetics, to facilitate manufacturing, processing, handling, and application of the composition, and to further improve a particular functional property of a coating composition or a cured coating resulting therefrom.

Such optional ingredients include, for example, dyes, pigments, toners, extenders, fillers, lubricants, anticorrosion agents, flow control agents, thixotropic agents, dispersing agents, antioxidants, adhesion promoters, light stabilizers, organic solvents, and mixtures thereof. Each optional ingredient is included in a sufficient amount to serve its intended purpose, but not in such an amount to adversely affect a coating composition or a cured coating resulting therefrom. The amounts of such additives can be determined readily by one of skill in the art.

A particularly useful optional ingredient is a lubricant, which facilitates manufacture of coated articles (e.g., food or beverage can ends) by imparting lubricity to planar coated metal substrate. A lubricant may be present in the coating composition in an amount of at least 0.1 wt-%, or at least 0.3 wt-%, based on nonvolatile material. A lubricant may be present in the coating composition in an amount of up to 5 wt-%, or up to 3.5 wt-%, based on nonvolatile material. Exemplary lubricants include, for example, Carnauba wax, polyethylene- and polypropylene-type lubricants, polytetrafluoroethylene (PTFE)-modified polyethylene lubricants, and Fisher-Tropsch lubricants.

Another particularly useful optional ingredient is a pigment, like titanium dioxide. A pigment is optionally present in the coating composition in an amount of up to 50 wt-%, based on the total weight of the nonvolatile material.

In some embodiments, the cured coating of the present disclosure has a Tg of at least 20°C, at least 25°C, or at least 30°C. In some embodiments, the Tg of the cured coating is less than about 80°C, less than about 70°C, or less than about 60°C.

In certain embodiments, such as for certain spray coating applications (e.g., inside spray for food or beverage cans including, e.g., aluminum beverage cans), an aqueous coating composition includes solids in an amount of at least 5 wt-%, at least 10 wt-%, or at least 15 wt-%, based on total weight of the aqueous composition. In certain embodiments, the aqueous composition includes solids in an amount of up to 40 wt-%, up to 35 wt-%, up to 30 wt-%, or up to 25 wt-%, based on total weight of the aqueous composition. The aqueous carrier may constitute the remainder of the weight of the aqueous composition.

As used herein, a bisphenol compound refers to a polyhydric polyphenol having two phenylene groups (i.e., a six-carbon atom aryl ring having any substituent groups including hydrogen atoms, halogens, hydroxyl groups, etc.) that each include six-carbon rings and a hydroxy (-OH) group attached to a carbon atom of the ring, wherein the rings of the two phenylene groups do not share any atoms in common. As used herein, "structural units derived therefrom" includes diepoxide groups of bisphenols, such as in BADGE (Bisphenol A diglycidyl ether).

In certain embodiments, the container coating compositions of the present disclosure are substantially free of each of bisphenol A, bisphenol F, and bisphenol S, as well as structural units derived therefrom. Preferably, the container coating compositions are substantially free of structural units derived from all bisphenol compounds (including non-estrogenic bisphenol compounds), as well as structural units derived therefrom. As used herein, the term "substantially free" means that the container coating compositions of the present disclosure contain less than 1000 parts per million (ppm), if any, of each of bisphenol A, bisphenol F, and bisphenol S, as well as structural units derived therefrom (in total), or preferably of all bisphenol compounds, as well as structural units derived therefrom (in total).

In certain embodiments, the container coating compositions are essentially free of each of bisphenol A, bisphenol F, and bisphenol S, as well as structural units derived therefrom. In certain preferred embodiments, the container coating compositions are essentially free of all bisphenol compounds (including non-estrogenic bisphenol compounds), as well as structural units derived therefrom. As used herein, the term "essentially free" means that the container coating compositions of the present disclosure contain than 100 ppm, if any, of each of bisphenol A, bisphenol F, and bisphenol S, as well as structural units derived therefrom (in total), or preferably of all bisphenol compounds, as well as structural units derived therefrom (in total).

In certain embodiments, the container coating compositions are essentially completely free of each of bisphenol A, bisphenol F, and bisphenol S, as well as structural units derived therefrom. In certain preferred embodiments, the container coating compositions are essentially completely free of all bisphenol compounds (including non-estrogenic bisphenol compounds), as well as structural units derived therefrom. As used herein, the term "essentially completely free" means that the container coating compositions of the present disclosure contain less than 5 ppm, if any, of each of bisphenol A, bisphenol F, and bisphenol S, as well as structural units derived therefrom (in total), or preferably of all bisphenol compounds, as well as structural units derived therefrom (in total).

In certain embodiments, the container coating compositions are completely free of each of bisphenol A, bisphenol F, and bisphenol S, as well as structural units derived therefrom. In certain preferred embodiments, the container coating compositions are completely free of all bisphenol compounds (including non-estrogenic bisphenol compounds), as well as structural units derived therefrom. As used herein, the term "completely free" means that the container coating compositions of the present disclosure contain less than 20 parts per billion (ppb), if any, of each of bisphenol A, bisphenol F, and bisphenol S, as well as structural units derived therefrom (in total), or preferably of all bisphenol compounds, as well as structural units derived therefrom (in total).

Coating compositions of the present disclosure may be prepared by conventional methods in various ways. For example, the coating compositions may be prepared by simply admixing the polyester, optional crosslinker and any other optional ingredients, in any desired order, with sufficient agitation. The resulting mixture may be admixed until all the composition ingredients are substantially homogeneously blended. Alternatively, the coating compositions may be prepared as a liquid solution or dispersion by admixing an optional carrier liquid, polyester, optional crosslinker, and any other optional ingredients, in any desired order, with sufficient agitation. An additional amount of carrier liquid may be added to the coating compositions to adjust the amount of nonvolatile material in the coating composition to a desired level.

A method of coating a food or beverage container and a use
of coating compositions of the present disclosure include: providing a coating composition as described herein; applying the coating composition to at least a portion of a metal substrate prior to or after forming the metal substrate into a food or beverage container (e.g., a can) or portion thereof; and thermally curing the coating composition.

In certain embodiments of such methods, the metal substrate includes a steel or aluminum substrate. In certain embodiments of such methods, the coating composition is applied to a preformed food or beverage container or a portion thereof. That is, in certain embodiments, the metal substrate is in the form of a preformed food or beverage can having a sidewall and a bottom end, and spraying comprises spraying an interior surface of the sidewall and bottom end.

In certain embodiments of such methods, the coating composition is applied to a food- or beverage-contact surface of the metal substrate (e.g., an interior side of a food or beverage can or a surface that will become an interior side of a food or beverage can). Thus, methods of the present disclosure can involve applying the coating composition to a flat substrate, and then forming the flat metal substrate into at least a portion of a container (e.g., food or beverage can) after thermally curing the coating composition.

In certain embodiments of such methods, applying the coating composition includes spraying the coating composition on the metal substrate (e.g., to the interior of partially or fully formed sidewall and end portions of a food or beverage can) in an amount sufficient to form a cured coating having an average dry film weight of 1 mg/in² (i.e., 1.55 g/m²) to 20 mg/in² (i.e., 31 g/m2).

The disclosed coating compositions may be present as a layer of a mono-layer coating system or as one or more layers of a multi-layer coating system. The coating compositions can be used as a primer coat, an intermediate coat, a top coat, or a combination thereof. The coating thickness of a particular layer and of the overall coating system will vary depending upon the coating material used, the substrate, the coating application method, and the end use for the coated article. In certain embodiments, a coating prepared from a coating composition of the present disclosure, particularly if an inside container coating, has an average overall coating thickness of at least 1 micron, and often up to 20 microns.

Mono-layer or multi-layer coating systems including one or more layers formed from the disclosed coating compositions may have any suitable overall coating thickness, and typically are applied, using the mixed units commonly employed in the packaging industry, at coating weights of 1 milligram per square inch (mg/in² or msi) (i.e., 1.55 gram per square meter (g/m²)) to 20 mg/in² (i.e., 31 g/m²), and more typically at 1.5 mg/in² to 10 mg/in² (i.e., 2.3 g/m² to 15.5 g/m²). That is, in certain embodiments, the cured coating has an average dry film weight of 1 mg/in² (i.e., 1.55 g/m²) to 20 mg/in² (i.e., 31 g/m²). Typically, the cured coating weight for rigid metal containers (e.g., food or beverage cans) are 1 mg/in² (i.e., 1.55 g/m²) to 6 mg/in² (i.e., 9.3 g/m²). In certain embodiments in which a coating composition of the present disclosure is used as an interior coating on a drum (e.g., a drum for use with food or beverage products), the coating weight may be approximately 20 mg/in² (i.e., 31 g/m²).

In certain embodiments, cured coatings of the coating compositions described herein have a high degree of flexibility, which can be a very useful property in food and beverage cans, for example. Flexibility can be evaluated by the Wedge Bend Test and/or the Porosity Test described in the Examples Section, wherein a coating is applied on Electrolytic Tin plate (18/100, 2.8/2.8, TH550) at a dry film weight of 15 ± 1 g/m² and cured for 10 minutes at 200-205°C (PMT). A mono-coat coating system is considered to satisfy the Wedge Bend Test if it exhibits a wedge bend percentage of 70% or more, whereas a two-coat coating system is considered to satisfy the test if it exhibits a wedge bend percentage of 85% or more. A coating is considered to satisfy the Porosity Test if it passes an electric current (after end formation) of less than about 10 milliamps (mA) when tested according to the Porosity Test.

The metal substrate used in forming rigid containers (e.g., food or beverage cans), or portions thereof, typically has a thickness in the range of 125 microns to 635 microns. Electro tinplated steel, cold-rolled steel, and aluminum are commonly used as metal substrates for food or beverage cans, or portions thereof. In embodiments in which a metal foil substrate is employed in forming, e.g., a packaging article, the thickness of the metal foil substrate may be even thinner that that described above.

The disclosed coating compositions may be applied to a substrate either prior to, or after, the substrate is formed into an article such as, for example, a food or beverage container or a portion thereof. In one embodiment, a method of forming food or beverage containers is provided that includes: applying (via spray application, dipping, etc.) a coating composition described herein to a metal substrate (e.g., applying the composition to the metal substrate in the form of a planar coil or sheet), thermally curing the coating composition, and forming (e.g., via stamping) the substrate into a packaging container or a portion thereof (e.g., a food or beverage can or a portion thereof). For example, two-piece or three-piece cans or portions thereof such as riveted beverage can ends (e.g., soda or beer cans) with a cured coating of the disclosed coating composition on a surface thereof can be formed in such a method.

The disclosed coating compositions are particularly well adapted for use on food and beverage cans (e.g., two-piece cans, three-piece cans, etc.). Two-piece cans are manufactured by joining a can body (typically a drawn metal body) with a can end (typically a drawn metal end). The disclosed coatings are suitable for use in food or beverage contact situations and may be used on the inside of such cans (e.g., as a continuous inside spray coating, for example, on a food- or beverage-contact surface of a metal substrate). They are particularly suitable for being spray applied, liquid coatings for the interior side of an article (e.g., two-piece drawn and ironed aluminum beverage cans and coil coatings for beverage can ends). The disclosed coating compositions also offer utility in other applications. These additional applications include, but are not limited to, wash coating, sheet coating, and side seam coatings (e.g., food can side seam coatings).

Spray coating methods include the introduction via spraying of a coating composition onto a surface, e.g., into the inside of a preformed packaging container. Typical preformed packaging containers suitable for spray coating include food cans, beer and beverage containers, and the like. The spray preferably utilizes a spray nozzle capable of uniformly coating the inside of the preformed packaging container. The sprayed preformed container is then subjected to heat to remove the carrier (i.e., water and/or organic solvents) and harden the coating.

In addition to spray coating, the coating composition of the present disclosure can be applied to a substrate using any suitable procedure such as roll coating, coil coating, curtain coating, immersion coating, meniscus coating, kiss coating, blade coating, knife coating, dip coating, slot coating, slide coating, and the like, as well as other types of premetered coating. In an embodiment where the coating is used to coat metal sheets or coils, the coating can be applied by roll coating.

A coil coating is described as the coating of a continuous coil composed of a metal (e.g., steel or aluminum). Once coated, the coating coil is subjected to a short thermal, ultraviolet or electromagnetic curing cycle, for hardening (e.g., drying and curing) of the coating. Coil coatings provide coated metal (e.g., steel or aluminum) substrates that can be fabricated into formed articles, such as two-piece drawn food cans, three-piece food cans, food can ends, drawn and ironed cans, beverage can ends, and the like.

For any of the application techniques described above, the curing process may be performed in either discrete or combined steps. For example, substrates can be dried at ambient temperature to leave the coating composition in a largely uncrosslinked state. The coated substrates can then be heated to fully cure the compositions. In certain instances, the disclosed coating compositioans may be dried and cured in one step. The cure conditions will vary depending upon the method of application and the intended end use.

In certain embodiments, the food or beverage container coating composition of the present disclosure is thermally curable. In this context, thermally curable refers to conditions of temperature and time usually used in container coating lines. The thermal curing process may be performed at any suitable temperature, including, for example, oven temperatures in the range of from 170°C to 230°C, and more typically from 190°C to 220°C, for a time period of 10 seconds to 20 minutes, and more typically for a time period of 30 seconds to 10 minutes. If the substrate to be coated is a metal coil, curing of the applied coating composition may be conducted, for example, by heating the coated metal substrate over a suitable time period to a peak metal temperature ("PMT") of preferably greater than 180°C. More preferably, the coated metal coil is heated for a suitable time period (e.g., 5 to 900 seconds) to a PMT of at least 200°C. Other commercial coating application and curing methods are also envisioned, for example, electrocoating, extrusion coating, laminating, powder coating, and the like.

### EXEMPLARY EMBODIMENTS OF THE PRESENT INVENTION

Embodiment 1 is a food or beverage container coating composition comprising a furan-containing polyester (e.g., a 2,5-furandicarboxylate polyester) and a liquid carrier (e.g., water and/or an organic solvent), as defined in claim 1.

Embodiment 2 is the container coating composition of embodiment 1 wherein the furan-containing polyester has a number average molecular weight of at least 1,000 Da, at least 2,000 Da, or at least 3,000 Da.

Embodiment 3 is the container coating composition of embodiment 2 wherein the furan-containing polyester has a number average molecular weight of up to 20,000 Da, up to 15,000 Da, up to 10,000 Da, or up to 7,000 Da.

Embodiment 4 is the container coating composition of any of the preceding embodiments wherein the furan-containing polyester has a Tg of at least 10°C, or at least 25°C.

Embodiment 5 is the container coating composition of any of the preceding embodiments wherein the furan-containing polyester has a Tg of less than 100°C, or less than 50°C.

Embodiment 6 is the container coating composition of any of the preceding embodiments wherein the furan-containing polyester has an acid number of at least 1, at least 5, at least 10, at least 15, at least 20, at least 25, or at least 30, mg KOH per gram dry resin.

Embodiment 7 is the container coating composition of any of the preceding embodiments wherein the furan-containing polyester has an acid number of up to 400, up to 300, up to 200, or up to 100, mg KOH per gram dry resin.

Embodiment 8 is the container coating composition of any of the preceding embodiments wherein the furan-containing polyester has a hydroxyl number of at least 5, at least 10, at least 15, at least 20, mg KOH per gram dry resin.

Embodiment 9 is the container coating composition of any of the preceding embodiments wherein the furan-containing polyester has a hydroxyl number of up to 100, up to 50, or up to 25, mg KOH per gram dry resin.

Embodiment 10 is the container coating composition of any of the preceding embodiments wherein the furan-containing polyester comprises at least 10 wt-%, at least 15 wt-%, or at least 20 wt-%, furan groups in the backbone of the polyester.

Embodiment 11 is the container coating composition of any of the preceding embodiments wherein the furan-containing polyester comprises up to 35 wt-%, up to 30 wt-%, or up to 25 wt-%, furan groups in the backbone of the polyester.

Embodiment 12 is the container coating composition of any of the preceding embodiments wherein the furan-containing polyester comprises less than 5 wt-%, less than 4 wt-%, less than 3 wt-%, less than 2 wt-%, less than 1 wt-%, less than 0.5 wt-%, or less than 0.1 wt-%, terephthalic acid.

Embodiment 13 is the container coating composition of any one of the preceding embodiments which has a viscosity of at least 50 mPa/s, at least 100 mPa/s, or at least 1,000 mPa/s at 25°C.

Embodiment 14 is the container coating composition of any one of the preceding embodiments which has a viscosity of up to 50,000 mPa/s, up to 10,000 mPa/s, or up to 5,000 mPa/s at 25°C.

Embodiment 15 is the container coating composition of any one of the preceding embodiments wherein the composition is thermally curable at an oven temperature of 170°C to 230°C, or 190°C to 220°C.

Embodiment 16 is the container coating composition of any one of the preceding embodiments wherein the composition is thermally curable within a period of 10 seconds to 20 minutes.

Embodiment 17 is the container coating composition of embodiment 16 wherein the composition is thermally curable within a period of 30 seconds to 10 minutes.

Embodiment 18 is the container coating composition of any one of embodiments 1 to 17 wherein the liquid carrier comprises water (optionally in combination with one or more organic solvents and is an aqueous coating composition).

Embodiment 19 is the container coating composition of embodiment 18 wherein the liquid carrier comprises at least 20 wt-%, at least 30 wt-%, at least 40 wt-%, at least 50 wt-%, at least 60 wt-%, at least 70 wt-%, or at least 80 wt-%, of water, based on the total weight of the liquid carrier.

Embodiment 20 is the container coating composition of embodiment 18 or 19 wherein the liquid carrier comprises 100 wt-% or less, less than 95 wt-%, or less than 90 wt-%, of water, based on the total weight of the liquid carrier.

Embodiment 21 is the container coating composition of embodiment 20 wherein the liquid carrier is free or substantially free of organic solvent.

Embodiment 22 is the container coating composition of any one of embodiments 1 to 17 wherein the coating composition comprises an organic solvent, wherein the coating composition is a solvent-based coating composition that includes 0 to 2 wt-% water.

Embodiment 23 is the container coating composition of any one of embodiments 18 to 22 wherein the organic solvent is selected from ketones, glycol ethers, esters, alcohols, aromatics, and combinations thereof.

Embodiment 24 is the container coating composition of embodiment 23 wherein the organic solvent is selected from cyclohexanone, carbitol, butyl carbitol, butylcellosolve, butanol, methyl isobutyl ketone, methyl isoamyl ketone, methyl amyl ketone, xylene, aromatic 150, aromatic 100, hexylcellosolve, toluene, propylene glycol monomethyl ether acetate, propylene glycol monomethyl ether, butyl acetate, dibasic ester, ethyl carbitol, diisobutyl ketone, and mixtures thereof.

Embodiment 25 is the container coating composition of any one of the preceding embodiments comprising greater than 50 wt-% of the furan-containing polyester, at least 60 wt-%, at least 70 wt-%, at least 80 wt-%, at least 90 wt-%, at least 95 wt-%, at least 98 wt-%, at least 99 wt-%, or 100 wt-%, of the furan-containing polyester, based on the total weight of the resin solids of the coating composition.

Embodiment 26 is the container coating composition of any one of the preceding embodiments comprising at least 30 wt-%, at least 40 wt-%, or at least 50 wt-%, of the liquid carrier, based on the total weight of the coating composition.

Embodiment 27 is the container coating composition of any one of the preceding embodiments comprising less than 90 wt-%, or less than 80 wt-%, of the liquid carrier, based on the total weight of the coating composition.

Embodiment 28 is the container coating composition of any one of the previous embodiments further comprising a catalyst.

Embodiment 29 is the container coating composition of embodiment 28 wherein the catalyst is selected from the group of a strong acid, a quaternary ammonium compound, a phosphorous compound, a tin compound, a zinc compound, a titanium compound, a zirconium compound, and a combination thereof.

Embodiment 30 is the container coating composition of any one of the preceding embodiments further comprising a lubricant, a pigment, or a combination thereof.

Embodiment 31 is the container coating composition of embodiment 30 further comprising a lubricant in an amount of at least 0.1 wt-% and up to 5 wt-%, based on nonvolatile material.

Embodiment 32 is the container coating composition of any one of the preceding embodiments further comprising a crosslinking resin.

Embodiment 33 is the container coating composition of embodiment 32 wherein the crosslinking resin comprises an aminoplast, phenoplast, a blocked isocyanate, a beta-hydroxyalkyl amide, a benzoxazine, an oxazoline, a carbonyl dicaprolactam, or a combination thereof.

Embodiment 34 is the container coating composition of embodiment 32 or 33 wherein the crosslinking resin is present in an amount of at least 5 wt-%, at least 10 wt-%, or at least 15 wt-%, based on the total weight of the resin solids in the coating composition.

Embodiment 35 is the container coating composition of any one of embodiments 32 to 34 wherein the crosslinking resin is present in an amount of up to 40 wt-%, up to 30 wt-%, or up to 25 wt-%, based upon the total weight of the resin solids in the coating composition.

Embodiment 36 is the container coating composition of any one of the preceding claims which is stable under normal storage conditions for at least 1 week, at least 1 month, or at least 3 months.

Embodiment 37 is the container coating composition of any one of the preceding embodiments which is an inside spray coating.

Embodiment 38 is a method of coating a food or beverage container, the method comprising: providing a food or beverage container coating composition of any one of the preceding embodiments; applying the coating composition to at least a portion of a metal substrate prior to or after forming the metal substrate into a food or beverage container or portion thereof; and thermally curing the coating composition to form a cured coating.

Embodiment 39 is the method of embodiment 38 wherein the substrate is a flat substrate, and the method further comprises forming the flat metal substrate into at least a portion of a food or beverage container after thermally curing the coating composition.

Embodiment 40 is the method of embodiment 38 wherein the metal substrate is in the form of at least a portion of a preformed food or beverage container.

Embodiment 41 is the method of any one of embodiments 38 to 40 wherein applying the coating composition comprises spraying the coating composition onto the metal substrate.

Embodiment 42 is the method of embodiment 41 wherein the metal substrate is in the form of a preformed food or beverage can having a sidewall and a bottom end, and spraying comprises spraying an interior surface of the sidewall and bottom end.

Embodiment 43 is a food or beverage container prepared by the method of any one of embodiments 38 to 42.

Embodiment 44 is a food or beverage container comprising a metal substrate having a surface (e.g., an inside surface, an exterior surface, or both) at least partially coated with a coating comprising a furan-containing polyester formed from any of the coating compositions of embodiments 1 to 37.

Embodiment 45 is the container of embodiment 44 wherein the coating is an inside coating.

Embodiment 46 is the container of embodiment 43, 44, or 45 wherein the coating has an average overall dry coating thickness of 1 micron to 20 microns.

Embodiment 47 is the container of any one of embodiments 43 to 46 wherein the (cured) coating has a Tg of at least 20°C, at least 25°C, or at least 30°C.

Embodiment 48 is the container of any one of embodiments 43 to 47 wherein the (cured) coating has a Tg of less than 80°C, less than 70°C, or less than 60°C.

Embodiment 49 is the container coating composition of any one of embodiments 1 to 37 wherein the furan-containing polyester is not made using neopentyl glycol.

Embodiment 50 is a food or beverage container comprising a metal substrate having a surface at least partially coated with a cured coating comprising a furan-containing polyester formed from any of the coating compositions of embodiments 1 to 37 or 49.

Embodiment 51 is the container of embodiment 50 wherein the cured coating is a mono-coat coating that exhibits a wedge bend percentage of 70% or more according to the Wedge Bend Test.

Embodiment 52 is the container of embodiment 50 wherein the cured coating is a two-coat coating that exhibits a wedge bend percentage of 85% or more according to the Wedge Bend Test.

Embodiment 53 is the container of any one of embodiments 50 to 52 wherein the cured coating passes an electric current (after end formation) of less than about 10 milliamps (mA) when tested according to the Porosity Test.

### EXAMPLES

These Examples are merely for illustrative purposes and are not meant to be overly limiting on the scope of the appended claims. Notwithstanding that the numerical ranges and parameters setting forth the broad scope of the present disclosure are approximations, the numerical values set forth in the specific examples are reported as precisely as possible. Any numerical value, however, inherently contains certain errors necessarily resulting from the standard deviation found in their respective testing measurements. At the very least, and not as an attempt to limit the application of the doctrine of equivalents to the scope of the claims, each numerical parameter should at least be construed in light of the number of reported significant digits and by applying ordinary rounding techniques.

Unless otherwise noted, all parts, percentages, ratios, etc. in the examples and the rest of the specification are by weight, and all reagents used in the examples were obtained, or are available, from general chemical suppliers such as, for example, Sigma-Aldrich Company, Saint Louis, Missouri, or may be synthesized by conventional methods. The following abbreviations may be used in the following examples: ppm = parts per million; phr = parts per hundred rubber; mL = milliliter; L = liter; m = meter, mm = millimeter, cm = centimeter, kg = kilogram, g = gram, min = minute, s = second, h = hour, °C = degrees Celsius, °F = degrees Farenheit, MPa = megapascals, and N-m = Newton-meter, Mn = number average molecular weight, cP = centipoise.

### Test Methods

Unless indicated otherwise, the following test methods may be utilized.

### Differential Scanning Calorimetry for Tg

Samples for differential scanning calorimetry ("DSC") testing are prepared by first applying the liquid resin composition onto aluminum sheet panels. The panels are then baked in a Fisher Isotemp electric oven for 20 minutes at 300°F (149°C) to remove volatile materials. After cooling to room temperature, the samples are scraped from the panels, weighed into standard sample pans, and analyzed using the standard DSC heat-cool-heat method. The samples are equilibrated at - 60°C, then heated at 20°C per minute to 200°C, cooled to -60°C, and then heated again at 20°C per minute to 200°C. Glass transition temperatures are calculated from the thermogram of the last heat cycle. The glass transition is measured at the inflection point of the transition.

### Viscosity (Falling Ball) of Polyester Resin

Viscosities of resins were measured using a falling ball viscometer based on Newtonian behavior. The method applies Newton's law of motion under force balance on a falling sphere ball when it reaches a terminal velocity. In Newton's law of motion for a falling ball, there exist buoyancy force, weight force, and drag force, and these three forces reach a net force of zero. The sample viscosity correlates with the time required by the ball to drop a specific distance, and the test results are given as dynamic viscosity. The temperature at which the viscosity was measured was 25°C.

### Viscosity (Iso 6 at 25°C) of Coating Composition

Viscosities of coating compositions were measured according to ASTM D 1200 using Iso cup No. 6 (a European standard).

### Acid Number of Polyester Resin

Acid numbers (ANs) of resins were measured using a titration method with 0.1 N KOH in methanol and phenolphthalein indicator. Based on the amount of KOH consumed, calculate the acid number and report it as mg KOH per 1 gram of dry resin.

### MEK Solvent Resistance of Coating

The extent of "cure" or crosslinking of a coating is measured as a resistance to solvents, such as methyl ethyl ketone (MEK). This test is performed as described in ASTM D 5402-93. The number of double-rubs (i.e., one back-and-forth motion) is reported. Preferably, the MEK solvent resistance is at least 30 double rubs (DR).

### Wedge Bend Test of Coating

This test provides an indication of a level of flexibility of a coating and an extent of cure. Test wedges are formed from coated rectangular metal test sheets (which measured 12 cm long by 5 cm wide). Test wedges are formed from the coated sheets by folding (i.e., bending) the sheets around a mandrel. To accomplish this, the mandrel is positioned on the coated sheets so that it is oriented parallel to, and equidistant from, the 12 cm edges of the sheets. The resulting test wedges have a 6-mm wedge diameter and a length of 12 cm. To assess the wedge bend properties of the coatings, the test wedges are positioned lengthwise in a metal block of a wedge bend tester and a 2.4 kg weight is dropped onto the test wedges from a height of 60 cm.

The deformed test wedges are then immersed in a copper sulphate test solution (prepared by combining 20 parts of CuSO₄·5H₂O, 70 parts of deionized water, and 10 parts of hydrochloric acid (36%)) for about 2 minutes. The exposed metal is examined under a microscope and the millimeters of coating failure along the deformation axis of the test wedges measured. The data is expressed as a wedge bend percentage using the following calculation: 100%×[(120 mm)-(mm of failure)]/(120 mm).

A mono-coat coating system is considered to satisfy the Wedge Bend Test if it exhibits a wedge bend percentage of 70% or more, whereas a two-coat coating system is considered to satisfy the test if it exhibits a wedge bend percentage of 85% or more.

### Porosity Test of Coating

This test provides an indication of the level of flexibility of a coating. Moreover, this test measures the ability of a coating to retain its integrity as it undergoes the formation process necessary to produce a food or beverage can end. In particular, it is a measure of the presence or absence of cracks or fractures in the formed end To be suitable for food or beverage can end applications, a coating composition should preferably exhibit sufficient flexibility to accommodate the extreme contour of the rivet portion of the easy open food or beverage can end.

The end is typically placed on a cup filled with an electrolyte solution. The cup is inverted to expose the surface of the end to the electrolyte solution. The amount of electrical current that passes through the end is then measured. If the coating remains intact (no cracks or fractures) after fabrication, minimal current will pass through the end.

For the present evaluation, standard profile 3-piece tinplate steel food can ends (73 mm diameter) are exposed for a period of 4 seconds to a solution of salt 1% in water before retorting.

The same measurement takes place after retorting (1H30 130°C) in an electrolyte solution (2% salt in tap water, 1% lactic acid in tap water, 3% acetic acid in tap water).

Metal exposures are measured using a WACO Enamel Rater II, available from the Wilkens-Anderson Company, Chicago, IL, with an output voltage of 6.3 volts. The measured electrical current, in milliamps, is reported. End continuities are typically tested initially and then after the ends are subjected to pasteurization or retort.

A coating is considered herein to satisfy the Porosity Test if it passes an electric current (after end formation) of less than about 10 milliamps (mA) when tested as described above.

### Altek Slip

The Altek Slip is the coefficient of friction (COF) measured with the equipment supplied by the Altek Company. The values are unitless. Acceptable values depend on the final use of the coated articles. Generally, desirable values are less than 0.1. An analogous test is ASTM D 3330.

### Preparation of Polyester Resins

| Raw Materials (grams) | Standard Resin (Example 1) | Example 2 |
|---|---|---|
| Neopentyl glycol (NPG) | 9.9 | 9.3 |
| Monoethylene glycol (MEG) | 7.9 | 7.9 |
| 1,6-Hexanediol (1,6-HD) | 17.0 | 17.0 |
| Trimethylol propane (TMP) | 1.0 | 1.0 |
| Terephthalic acid (TPA) | 18.5 | 0 |
| 2,5-Furan dicarboxylic acid dimethyl ester (FDCA Diester) | 0 | 25.57 |
| Titanium Catalyst | 0.1 | 0.1 |
| Isophthalic acid | 37.7 | 38.2 |
| Dimer fatty acid (Radiacid 960 from Oleon) | 8 | 8 |
| Xylene | 3.2 | 3.2 |
| Butylglycol acetate (BGA) | 36.8 | 36.8 |
| | | |
| Viscosity (falling ball) 25°C | 58 P | 293 P |
| Non-volatile content (NVC) (30 mn, 180°C, 1 g) | 59.6 % | 59.8% |
| Acid Number (measured value as mg KOH per 1 gram of dry resin) | 6.8 | 4.6 |
| Hydroxyl Number (calculated value as mg KOH per 1 gram of dry resin) | 39.7 | 38.5 |
| Calculated Molecular Weight (calculated) (g/mol) | 2630 | 2876 |

### Example 1 (Standard Polyester Resin With TPA; Comparative)

The ingredients of the polyester were charged to a separate vessel equipped with a stirrer, packed column, decanter, thermocouple, and heating mantle. The NPG, MEG, 1,6-HD, TMP, TPA, and titanium catalyst were loaded into the reactor. The mixture was heated progressively to 220°C while stirring and extracting distillate (water) through the packed column filled with rings. The temperature at the top of the packed column was maintained between 100°C and 104°C. Distillation was continued until the acid number (AN) < 2. The resin was then cooled to 165°C.

IPA and Radiacid 960 were loaded into the reactor. The mixture was heated progressively to 240°C while extracting water through the packed column filled with rings. The temperature at the top of the packed column was maintained between 100°C and 104°C. Distillation was continued until AN = 20-30. The resin was then cooled to 175°C.

Equipment for azeotropic distillation was then set up and xylene was loaded into the kettle. The reactor was heated until a stable distillation was reached. Distillation was continued until AN = 4-7. The resin was then cooled to 180°C for dilution with BGA, and then allowed to cool further while stirring.

### Example 2 (Polyester With FDCA Diester)

The ingredients of the polyester were charged to a separate vessel equipped with a stirrer, packed column, decanter, thermocouple, and heating mantle. The NPG, MEG, 1,6-HD, TMP, FDCA diester, and titanium catalyst were loaded into the reactor. The mixture was heated progressively to 220°C while stirring and extracting distillate (water) through the packed column filled with rings. The temperature at the top of the packed column was maintained between 68°C and 74°C. Distillation was continued until the weight of methanol extracted was 6.5 g. The resin was then cooled to 165°C.

IPA and Radiacid 960 were loaded into the reactor. The mixture was heated progressively to 240°C while extracting water through the packed column filled with rings. The temperature at the top of the packed column was maintained between 100°C and 104°C. Distillation was continued until AN = 20-30. The resin was then cooled to 175°C.

Equipment for azeotropic distillation was then set up and xylene was loaded into the kettle. The reactor was heated until a stable distillation was reached. Distillation was continued until AV = 4-7. The resin was then cooled to 180°C for dilution with BGA, and then allowed to cool further while stirring.

### Preparation of Coating Compositions

| Ingredient Number | Materials (grams) | Coating Standard Resin (Example 1) | Example 2 |
|---|---|---|---|
| 1 | Resin Example 1 | 85.2 | 0 |
| 2 | Resin Example 2 | 0 | 84.77 |
| 3 | Titanium Dioxide | 85.05 | 85.05 |
| 4 | Tensio active agent (BYK 359, a 50% solution of a polyacrylate oligomer in methoxy propyl acetate from Byk) | 1.53 | 1.53 |
| 5 | Dibasic ester | 9.73 | 9.73 |
| 6 | Methoxy propyl acetate | 12.5 | 12.5 |
| 7 | Resin Example 1 | 19.73 | 0 |
| 8 | Resin Example 2 | 0 | 19.63 |
| 9 | Crosslinking agent * | 20.5 | 20.5 |
| 10 | Methoxy propyl acetate | 4.48 | 4.48 |
| 11 | Flow additive (BYK 310, a 5% solution of a polyester-modified polydimethylsiloxane in butyl glycol from Byk) | 0.38 | 0.38 |
| 12 | Polyethylene (PE) wax dispersion (LUBAPRINT 351 G, a 60% solution in SOLVESSO 150 from Munzing) | 8.2 | 8.2 |
| 13 | Tin catalyst (FASCAT 9102, butyltin tris-2- ethylhexanoate from PMC Organometallic) | 0.13 | 0.13 |
| 14 | PTFE ((polytetrafluoroethylene) wax from Shamrock) | 8.2 | 8.2 |
| 15 | Xylene/ butylglycol acetate ( 8/92) | 4.2 | 37 |
| 16 | Methoxy propyl acetate | 2.53 | 2.53 |
| | | | |
| Viscosity Iso 6 at 25°C | | 82 sec | 78 sec |

| | | | |
|---|---|---|---|
| *= IPDI trimer caprolactame blocked in solution at 65% | | | |

Ingredients 1 to 5 were mixed together and dispersed at high speed until the dispersion reached 8 at the grinding gauge (North). Then ingredient 6 was added under agitation. After homogenization, ingredients 7 to 14 were introduced in that order. Ingredient 16 was added and the final viscosity was adjusted to be in the range of 75-85 sec Iso 6 25°C with ingredient 15. Coatings were left at least 18 hours before testing.

### Coating Evaluation

The various coatings were applied on Electrolytic Tin plate (18/100, 2.8/2.8, TH550) at a dry film weight of 15 ± 1 g/m² and cured for 10 minutes at 200-205°C (PMT).

**^{∗}= Porosity measurements are measured on standard profile 3 piece food can ends, diameter 73 mm**

| | Coating 1 | Coating 2 |
|---|---|---|
| | | |
| MEK (DR) | 79 | 75 |
| Altek slip | 0.045 | 0.047 |
| Wedge bend | 100% | 100% |
| Enamel rater before retorting * | 0.68 mA | 0.61 mA |
| Enamel rater after retort 3% acetic * | 6.5 mA | 5.3 mA |
| Enamel rater after retort 1% lactic acid * | 4.2 mA | 3 mA |
| Enamel rater after retort 2% salt * | 3 mA | 1.8 mA |
| Enamel rater after retort in tap water * | 2 mA | 3.6 mA |
| | | |

## Claims

1. A food or beverage container coating composition comprising a furan-containing polyester having a Tg of at least 0°C and less than 150°C determined by DSC in accordance with the description, and a liquid carrier,
wherein the furan-containing polyester comprises at least 5 wt-% and up to 40 wt-% furan groups in the backbone of the polyester, and
wherein the furan-containing polyester comprises less than 10 wt-% terephthalic acid (TPA), preferably no TPA,
wherein these weight percentages correspond to the total weight of furan-containing monomers or TPA monomers used to form the polyester relative to the total weight of the reactants used to form the polyester.

2. The container coating composition of claim 1, wherein the furan-containing polyester has a number average molecular weight of at least 1,000 Da and up to 20,000 Da determined by gel permeation chromatography (GPC) using a polystyrene standard for calibration.

3. The container coating composition of claim 1 or 2, wherein the furan-containing polyester has a Tg of at least 10°C and less than 100°C, measured as indicated in the specification.

4. The container coating composition of any of the preceding claims, wherein the furan-containing polyester comprises at least 10 wt-% and up to 35 wt-% furan groups in the backbone of the polyester.

5. The container coating composition of any one of the preceding claims, which has a viscosity of at least 50 mPa/s and up to 50,000 mPa/s at 25°C, measured as indicated in the specification.

6. The container coating composition of any one of the preceding claims, which is thermally curable at an oven temperature of 170°C to 230°C.

7. The container coating composition of any one of claims 1 to 6, which comprises water, wherein the coating composition is an aqueous coating composition.

8. The container coating composition of any one of claims 1 to 6, which comprises an organic solvent, wherein the coating composition is a solvent-based coating composition that includes 0 to 2 wt-% water.

9. The container coating composition of any one of the preceding claims, wherein the furan-containing polyester includes less than 5 wt-% or less than 2 wt-% TPA, preferably no TPA.

10. A food or beverage container comprising a metal substrate having a surface at least partially coated with a coating comprising a furan-containing polyester having a Tg of at least 0°C and less than 150°C determined by DSC in accordance with the description,
wherein the furan-containing polyester comprises at least 5 wt-% furan groups in the backbone of the polyester, and
wherein the furan-containing polyester comprises less than 10 wt-% terephthalic acid (TPA), preferably no TPA,
wherein the weight percentage corresponds to the total weight of furan-containing monomers used to form the polyester relative to the total weight of the reactants used to form the polyester.

11. The container of claim 10, wherein the coating comprising a furan-containing polyester is an inside coating, and the inside coating has an average overall dry coating thickness of 1 micron to 20 microns.

12. A food or beverage container comprising a metal substrate having a surface at least partially coated with a coating comprising a furan-containing polyester formed from any of the coating compositions of claims 1 to 9.

13. A method of coating a food or beverage container, the method comprising:
providing a food or beverage container coating composition of any one of claims 1 to 9;
applying the coating composition to at least a portion of a metal substrate prior to or after forming the metal substrate into a food or beverage container or portion thereof; and
thermally curing the coating composition to form a cured coating.

14. The method of claim 13, wherein the metal substrate is a flat substrate, and the method further comprises forming the flat metal substrate into at least a portion of a food or beverage can after thermally curing the coating composition.

15. The method of claim 14, wherein the metal substrate is in the form of at least a portion of a preformed food or beverage can.

16. The container coating composition of any one of claims 1-9 comprising less than 1000 ppm, if any, of each of bisphenol A, bisphenol F, and bisphenol S, as well as structural units derived therefrom (in total), or preferably of all bisphenol compounds, as well as structural units derived therefrom (in total).

## Patentansprüche

1. Lebensmittel- oder Getränkebehälterbeschichtungszusammensetzung, umfassend einen furanhaltigen Polyester, der eine Tg von mindestens 0 °C und weniger als 150 °C aufweist, die durch DSC gemäß der Beschreibung bestimmt wird, und einen flüssigen Träger,
wobei der furanhaltige Polyester mindestens 5 Gew.-% und bis zu 40 Gew.-% Furangruppen in dem Grundgerüst des Polyesters umfasst, und
wobei der furanhaltige Polyester weniger als 10 Gew.-% Terephthalsäure (TPA), vorzugsweise kein TPA, umfasst,
wobei diese Gewichtsprozente dem Gesamtgewicht von furanhaltigen Monomeren oder TPA-Monomeren entsprechen, die verwendet werden, um den Polyester relativ zu dem Gesamtgewicht der Reaktanten zu bilden, die verwendet werden, um den Polyester zu bilden.

2. Behälterbeschichtungszusammensetzung nach Anspruch 1, wobei der furanhaltige Polyester ein zahlenmittleres Molekulargewicht von mindestens 1.000 Da und bis zu 20.000 Da aufweist, das durch Gelpermeationschromatographie (GPC) unter Verwendung eines Polystyrolstandards für eine Kalibrierung bestimmt wird.

3. Behälterbeschichtungszusammensetzung nach Anspruch 1 oder 2, wobei der furanhaltige Polyester eine Tg von mindestens 10 °C und weniger als 100 °C aufweist, wie in der Patentschrift angegeben gemessen.

4. Behälterbeschichtungszusammensetzung nach einem der vorstehenden Ansprüche, wobei der furanhaltige Polyester mindestens 10 Gew.-% und bis zu 35 Gew.-% Furangruppen in dem Grundgerüst des Polyesters umfasst.

5. Behälterbeschichtungszusammensetzung nach einem der vorstehenden Ansprüche, die eine Viskosität von mindestens 50 mPa/s und bis zu 50.000 mPa/s bei 25 °C aufweist, wie in der Patentschrift angegeben gemessen.

6. Behälterbeschichtungszusammensetzung nach einem der vorstehenden Ansprüche, die bei einer Ofentemperatur von 170 °C bis 230 °C thermisch härtbar ist.

7. Behälterbeschichtungszusammensetzung nach einem der Ansprüche 1 bis 6, die Wasser umfasst, wobei die Beschichtungszusammensetzung eine wässrige Beschichtungszusammensetzung ist.

8. Behälterbeschichtungszusammensetzung nach einem der Ansprüche 1 bis 6, die ein organisches Lösungsmittel umfasst, wobei die Beschichtungszusammensetzung eine lösungsmittelbasierte Beschichtungszusammensetzung ist, die 0 bis 2 Gew.-% Wasser einschließt.

9. Behälterbeschichtungszusammensetzung nach einem der vorstehenden Ansprüche, wobei der furanhaltige Polyester weniger als 5 Gew.-% oder weniger als 2 Gew.-% TPA, vorzugsweise kein TPA, einschließt.

10. Lebensmittel- oder Getränkebehälter, umfassend ein Metallsubstrat, das eine Oberfläche aufweist, die mindestens teilweise mit einer Beschichtung beschichtet ist, umfassend einen furanhaltigen Polyester, der eine Tg von mindestens 0 °C und weniger als 150 °C aufweist, die durch DSC gemäß der Beschreibung bestimmt wird,
wobei der furanhaltige Polyester mindestens 5 Gew.-% Furangruppen in dem Grundgerüst des Polyesters umfasst, und
wobei der furanhaltige Polyester weniger als 10 Gew.-% Terephthalsäure (TPA), vorzugsweise kein TPA, umfasst,
wobei das Gewichtsprozent dem Gesamtgewicht von furanhaltigen Monomeren entspricht, die verwendet werden, um den Polyester relativ zu dem Gesamtgewicht der Reaktanten zu bilden, die verwendet werden, um den Polyester zu bilden.

11. Behälter nach Anspruch 10, wobei die Beschichtung, umfassend einen furanhaltigen Polyester, eine Innenbeschichtung ist und die Innenbeschichtung eine durchschnittliche Gesamttrockenbeschichtungsdicke von 1 Mikrometer bis 20 Mikrometer aufweist.

12. Lebensmittel- oder Getränkebehälter, umfassend ein Metallsubstrat, das eine Oberfläche aufweist, die mindestens teilweise mit einer Beschichtung beschichtet ist, umfassend einen furanhaltigen Polyester, der aus einer beliebigen der Beschichtungszusammensetzungen nach den Ansprüchen 1 bis 9 gebildet ist.

13. Verfahren zum Beschichten eines Lebensmittel- oder Getränkebehälters, das Verfahren umfassend:
Bereitstellen einer Lebensmittel- oder Getränkebehälterbeschichtungszusammensetzung nach einem der Ansprüche 1 bis 9;
Auftragen der Beschichtungszusammensetzung auf mindestens einen Abschnitt eines Metallsubstrats vor oder nach dem Ausbilden des Metallsubstrats zu einem Lebensmittel- oder Getränkebehälter oder einem Abschnitt davon; und
thermisches Härten der Beschichtungszusammensetzung, um eine gehärtete Beschichtung auszubilden.

14. Verfahren nach Anspruch 13, wobei das Metallsubstrat ein flaches Substrat ist und das Verfahren ferner das Ausbilden des flachen Metallsubstrats in mindestens einen Abschnitt eines Lebensmittel- oder Getränkebehälters nach dem thermischen Härten der Beschichtungszusammensetzung umfasst.

15. Verfahren nach Anspruch 14, wobei das Metallsubstrat in der Form von mindestens einem Abschnitt eines vorgeformten Lebensmittel- oder Getränkebehälters vorliegt.

16. Behälterbeschichtungszusammensetzung nach einem der Ansprüche 1 bis 9, umfassend weniger als 1000 ppm, wenn überhaupt, von jeweils Bisphenol A, Bisphenol F und Bisphenol S, sowie Struktureinheiten, die davon (insgesamt) abgeleitet sind. oder vorzugsweise von allen Bisphenolverbindungen, sowie Struktureinheiten, die davon (insgesamt) abgeleitet sind.

## Revendications

1. Composition de revêtement de récipient à aliment ou boisson comprenant un polyester contenant du furane ayant une Tg d'au moins 0 °C et inférieure à 150 °C déterminée par DSC conformément à la description, et un véhicule liquide,
le polyester contenant du furane comprenant au moins 5 % en poids et jusqu'à 40 % en poids de groupes furane dans le squelette du polyester, et
le polyester contenant du furane comprenant moins de 10 % en poids d'acide téréphtalique (TPA), de préférence ne comprenant pas de TPA,
ces pourcentages en poids correspondant au poids total de monomères contenant du furane ou monomères de TPA utilisés pour former le polyester par rapport au poids total des réactifs utilisés pour former le polyester.

2. Composition de revêtement de récipient selon la revendication 1, dans laquelle le polyester contenant du furane a une masse moléculaire moyenne en nombre d'au moins 1000 Da et jusqu'à 20 000 Da déterminée par chromatographie par perméation sur gel (CPG) à l'aide d'un étalon de polystyrène pour l'étalonnage.

3. Composition de revêtement de récipient selon la revendication 1 ou 2, dans laquelle le polyester contenant du furane a une Tg d'au moins 10 °C et inférieure à 100 °C, mesurée comme indiqué dans la spécification.

4. Composition de revêtement de récipient selon l'une quelconque des revendications précédentes, dans laquelle le polyester contenant du furane comprend au moins 10 % en poids et jusqu'à 35 % en poids de groupes furane dans le squelette du polyester.

5. Composition de revêtement de récipient selon l'une quelconque des revendications précédentes, qui a une viscosité d'au moins 50 mPa/s et jusqu'à 50 000 mPa/s à 25 °C, mesurée comme indiqué dans la spécification.

6. Composition de revêtement de récipient selon l'une quelconque des revendications précédentes, qui est thermiquement durcissable à une température de four de 170 °C à 230 °C.

7. Composition de revêtement de récipient selon l'une quelconque des revendications 1 à 6, qui comprend de l'eau, la composition de revêtement étant une composition aqueuse de revêtement.

8. Composition de revêtement de récipient selon l'une quelconque des revendications 1 à 6, qui comprend un solvant organique, la composition de revêtement étant une composition de revêtement à base de solvant qui comporte 0 à 2 % en poids d'eau.

9. Composition de revêtement de récipient selon l'une quelconque des revendications précédentes, dans laquelle le polyester contenant du furane comporte moins de 5 % en poids ou moins de 2 % en poids de TPA, de préférence ne comporte pas de TPA.

10. Récipient à aliment ou boisson comprenant un substrat métallique ayant une surface au moins partiellement revêtue d'un revêtement comprenant un polyester contenant du furane ayant une Tg d'au moins 0 °C et inférieure à 150 °C déterminée par DSC conformément à la description,
le polyester contenant du furane comprenant au moins 5 % en poids de groupes furane dans le squelette du polyester, et
le polyester contenant du furane comprenant moins de 10 % en poids d'acide téréphtalique (TPA), de préférence ne comprenant pas de TPA,
le pourcentage en poids correspondant au poids total de monomères contenant du furane utilisés pour former le polyester par rapport au poids total des réactifs utilisés pour former le polyester.

11. Récipient selon la revendication 10, dans lequel le revêtement comprenant un polyester contenant du furane est un revêtement intérieur, et le revêtement intérieur a une épaisseur globale moyenne de revêtement sec de 1 micromètre à 20 micromètres.

12. Récipient à aliment ou boisson comprenant un substrat métallique ayant une surface au moins partiellement revêtue d'un revêtement comprenant un polyester contenant du furane formé à partir de l'une quelconque des compositions de revêtement selon les revendications 1 à 9.

13. Procédé de revêtement d'un récipient à aliment ou boisson, le procédé comprenant :
la fourniture d'une composition de revêtement de récipient à aliment ou boisson selon l'une quelconque des revendications 1 à 9 ;
l'application de la composition de revêtement à au moins une partie d'un substrat métallique avant ou après formage du substrat métallique en un récipient à aliment ou boisson ou partie de celui-ci ; et
le durcissement thermique de la composition de revêtement pour former un revêtement durci.

14. Procédé selon la revendication 13, dans lequel le substrat métallique est un substrat plat, et le procédé comprend en outre le formage du substrat métallique plat en au moins une partie d'une boîte à aliment ou boisson après durcissement thermique de la composition de revêtement.

15. Procédé selon la revendication 14, dans lequel le substrat métallique est sous la forme d'au moins une partie d'une boîte à aliment ou boisson préformée.

16. Composition de revêtement de récipient selon l'une quelconque des revendications 1 à 9 comprenant moins de 1000 ppm, le cas échéant, de chacun parmi bisphénol A, bisphénol F et bisphénol S, ainsi que de motifs structuraux dérivés de ceux-ci (au total), ou de préférence de tous les composés de bisphénol, ainsi que de motifs structuraux dérivés de ceux-ci (au total).
